# EUROPÄISCHE PATENTSCHRIFT

(11) **EP 1 464 920 B1**
(45) Veröffentlichungstag und Bekanntmachung des Hinweises auf die Patenterteilung: **25.07.2007**
(21) Anmeldenummer: 03090091.4
(22) Anmeldetag: 03.04.2003
(51) Int. Cl.: G01B 11/24, G01B 11/30, G01B 11/00, G01B 21/20, G01B 21/30

(54) **Vorrichtung zum Erfassen, Bestimmen und Dokumentieren von Schäden, insbesondere durch plötzliche Ereignisse verursachte Deformationen an lackierten Oberflächen**
Apparatus for detecting, determining and documenting damages, in particular deformations of painted surfaces caused by sudden events
Dispositif pour détecter, déterminer et documenter les endommagements, en particulier les déformations de surfaces peintes causées par des évènements soudains

(43) Veröffentlichungstag der Anmeldung: 06.10.2004
(73) Patentinhaber: Pristner, Erwin, 13599 Berlin (DE)
(72) Erfinder: Pristner, Erwin, 13599 Berlin (DE)
(74) Vertreter: Hannig, Wolf-Dieter

(56) Entgegenhaltungen:
- EP-A- 0 405 806
- US-A- 3 968 559
- US-A- 4 715 709
- US-A- 4 989 981
- US-A- 5 844 801

## Beschreibung

Die Erfindung betrifft eine Vorrichtung zum Erfassen, Bestimmen und Dokumentieren von Schäden, insbesondere durch plötzliche Ereignisse, beispielsweise Hagelschlag, verursachte Deformationen wie Dellen o. dgl. an lackierten Oberflächen, insbesondere Karosserieteilen von Fahrzeugen, mit einer stark fokussierenden Lichtquelle zum Beleuchten einer mit Deformationen bzw. Schäden aufweisenden Oberfläche von lackierten Karosserieteilen eines Fahrzeuges, einer Ablenkeinrichtung für das Licht zum linien- und rasterförmigen Abscannen der Oberfläche, einem Schirm zum Abbilden der Oberfläche mittels der von der Oberfläche reflektierten Lichtstrahlen, Mittel zur Aufnahme der Bilder, einem Prozessor zum Verarbeiten und Auswerten der aufgenommenen Bilder sowie Mittel zur Anzeige und Ausgabe der Ergebnisse, wobei die Lichtquelle und der Schirm an einem Traggestell sowie ein Messtisch zur Aufnahme des Fahrzeugs in diesem angeordnet ist.

Es kommt vor allem in den Sommermonaten immer wieder vor, dass bei einem durch Unwetter hervorgerufenen Hagelschlag, Fahrzeuge nicht mehr rechtzeitig untergestellt werden können. Diese Fahrzeuge, insbesondere auch neue oder neuwertige Personenkraftfahrzeuge, Lieferwagen o. dgl. tragen an Dächern, Motorhauben, Kofferraumklappen, Kotflügeln, Türen, Spoilern, Seitenwänden und/oder Dachrahmen zum Teil erhebliche Schäden durch Dellen und/oder Einbeulungen davon. Besonders mindern kleine kaum sichtbare Einbeulungen den Verkaufs- oder Wiederverkaufswert eines derartig betroffenen Personenkraftfahrzeuges. Während zertrümmerte Front-, Heck- oder Seitenscheiben im Schadenregulierungsverfahren meistens mit den Versicherungen problemlos abgewickelt werden können, und auch große tiefe Einbeulungen durch einen nachgewiesenen Hagelschlag einvernehmlich reguliert werden, führen kleine und kaum sichtbare Dellen oft zu ärgerlichen und nervenaufreibenden Auseinandersetzungen der beteiligten Parteien. Die Beteiligten sind neben dem Geschädigten der schadensaufnehmende Sachverständige, der schadensregulierende Gutachter der Versicherung und im Besonderen der Fachbetrieb, der durch eine fachgerechte Reparatur den Wert des beschädigten Wagens wieder herstellen soll.
Bisher steht ein objektives Mess- und Beurteilungsverfahren für durch Hagelschlag verursachte Schäden an lackierten Oberflächen, insbesondere Karosserieteilen von Fahrzeugen, das den Schaden und auch die Qualität der durchgeführten Reparatur objektiv beschreibt und dokumentiert, nicht zur Verfügung.

Es ist zwar aus der DE 24 39 988 A ein Verfahren zur Ermittlung von örtlich begrenzten Formfehlern angewölbten Flächen, insbesondere an Oberflächen gepresster Karosserieteile für Kraftfahrzeuge, bei dem die zu prüfende Fläche mit gebündeltem Licht gitter- und rasterförmig abgetastet wird. Das Lichtgitter oder -raster wird dabei unter einem anderen Winkel als dem Auftreffwinkel des Lichtes in Form eines Bildes erfasst, welches im Hinblick auf örtlich begrenzte Verwerfungen des Gitters oder Rasters mathematisch analysiert wird. Das verwendete Licht besteht aus Laserlicht. Zur Ausführung des bekannten Verfahrens kommt ein Lichtstrahlerzeuger, eine Abtasteinrichtung zur Führung des Lichtstrahls in Gitter- oder Rasterform über die zu untersuchende Fläche, eine auf die Fläche unter einem anderen Winkel als der Lichtstrahl gerichtete Fernsehkamera mit Monitor sowie eine das Bild des Monitors auswertende Analysiereinheit.
Mit dieser bekannten Lösung werden vor allem Karosserieeinzelteile oder -baugruppen auf Formfehler analysiert. Das Verfahren ist in den Fertigungsprozess eingebunden, damit stationär und ortsgebunden. Seine Anwendung auf durch plötzliche Ereignisse wie Hagelschlag verursachte Schäden an Fahrzeugkarosserien wurde bisher nicht Betracht gezogen, weil einerseits eine Abtastung der gesamten Fahrzeugkarosserie erforderlich wird, für die die bekannte technische Lehre keinen Lösungsansatz gibt, und andererseits keine ausreichende Mobilität vorhanden ist.

Aus der US 4 989 981 A ist ein System zum Vermessen von Abmessungen eines Fahrzeugchassis einer Karosserie und seiner Oberflächenbeschaffenheit bekannt, bei der eine Vielzahl von Laser-Scan-Einrichtungen um die Karosserie herum angeordnet sind, welche als Distanz-Meßanordnungen fungieren.

Die US 4 715 709 A betrifft ein Verfahren zur Ermittlung von Oberflächenfehlern eines zu prüfenden Objektes, bei dem ein Laserstrahl in Schlitzkonfiguration auf eine reflektierende Oberfläche des zu prüfenden Objektes gerichtet wird, wobei die optischen Achsen von Laserstrahl und Empfänger zueinander fest in einer optischen Einheit angeordnet sind, die in unmittelbare Nähe der Oberfläche gebracht werden muss, wodurch die Prüfung der gesamten Oberfläche einer Autokarosserie auf Hagelschlag durch den enormen Zeitaufwand unwirtschaftlich wird.

In der EP 0 405 806 A2 ist ein Verfahren und eine Vorrichtung zum Prüfen von defekten Oberflächen eines ebenen oder nahezu ebenen Karosserieblechs eines Fahrzeugs beschrieben, bei der ebenfalls ein Laser als Lichtquelle eingesetzt, die in einer festen Position zum untersuchenden Karosserieblech liegt.

Die US 3 968 559 A bezieht sich auf die Montage von Kraftfahrzeugen oder Teilen eines Kraftfahrzeuges.

Bei diesem Stand der Technik liegt der Erfindung die Aufgabe zugrunde, eine Vorrichtung der eingangs genannten Art bereitzustellen, mit der es ermöglicht wird, durch plötzliche Ereignisse wie Hagelschlag verursachte Schäden an lackierten Oberflächen, insbesondere Karosserien von Fahrzeugen, und deren Reparatur objektiv zu beschreiben, zu beurteilen und zu dokumentieren.

Diese Aufgabe wird durch eine Vorrichtung der eingangs genannten Art mit den kennzeichnenden Merkmalen des Anspruches 1 gelöst.
Vorteilhafte Ausgestaltungen der Vorrichtung sind den Unteransprüchen entnehmbar.

Die erfindungsgemäße Lösung zeichnet sich dadurch aus, dass es erstmals möglich wird, durch Hagelschlag verursachte Schäden wie kleinflächige Dellen an lackierten Karosserieteilen für alle Beteiligten objektiv zu bestimmen, zu erfassen und zu dokumentieren. Des weiteren kann mit der erfindungsgemäßen Lösung eine fachgerechte Reparatur und Instandsetzung des betroffenen Fahrzeuges nachgewiesen werden. Von besonderem Vorteil ist die erreichte Mobilität der erfindungsgemäßen Lösung, mittels der innerhalb kurzer Zeit nach Eintritt eines Hagelschlages eine ursachenbezogene Schadensermittlung vorgenommen werden kann.
Durch die Anwendung eines fokussierten Lichtstrahles, beispielsweise Laserstrahles mit einem geringem Spotdurchmesser, kann eine sehr hohe Auflösung, d.h. Genauigkeit, der Abbildung der geschädigten Oberfläche erreicht werden. Die erfindungsgemäße Lösung erreicht des weiteren eine sehr große Abtastgeschwindigkeit, so dass die gesamte Oberfläche einer Karosserie in sehr kurzer Zeit abgebildet und analysiert werden kann.

Die erfindungsgemäße Vorrichtung verwirklicht darüber hinaus ein einfaches robustes, zugleich sicheres Abtastkonzept mit entlang an Streben eines Traggestells horizontal und vertikal verfahrbaren und verschwenkbaren Laserlichtquellen, deren Bewegungsablauf mit dem Bewegungsablauf des Fahrzeuges koordiniert ist. Dadurch können in einem einzigen Arbeitsgang die gesamte Karosserieoberfläche auf Schäden inspiziert, abgebildet, analysiert und begutachtet werden.
Die erfindungsgemäße Vorrichtung ist kompakt und einfach im Aufbau, die Funktionseinheiten sind übersichtlich und für Montage- und Wartungszwecke frei zugänglich angeordnet.

Die Erfindung soll nachstehend an mehreren Ausführungsbeispielen näher erläutert werden.

Es zeigt bzw. zeigen:
- Fig. 1: eine Prinzipdarstellung der erfindungsgemäßen Vorrichtung,
- Fig. 2: der typische Strahlenverlauf der Laserstrahlen an einer deformierten Karosserieoberfläche und
- Fig. 3: eine Variante des Traggestells mit integrierter erfindungsgemäßer Vorrichtung,

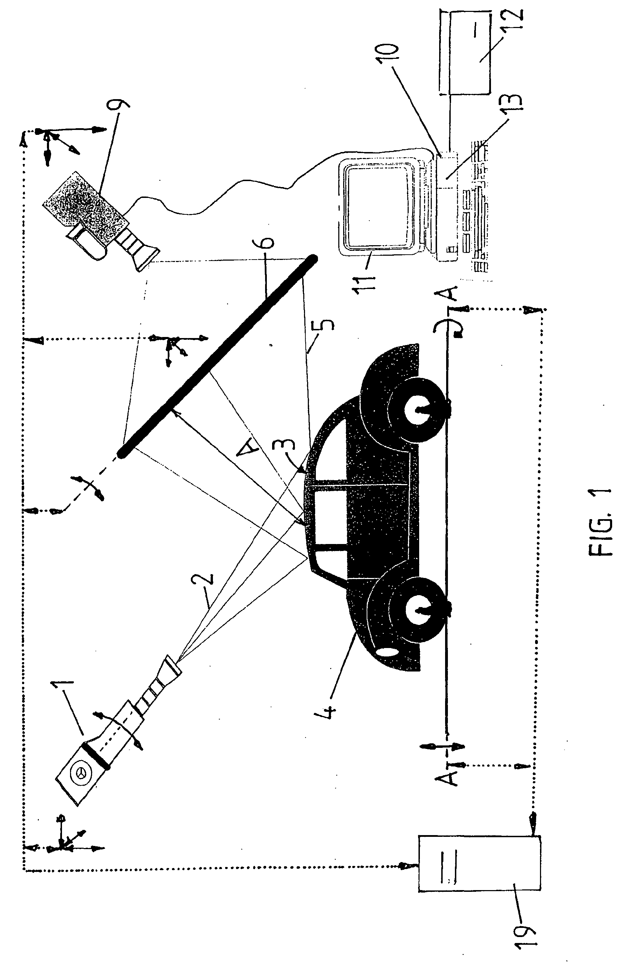

Fig. 1 zeigt eine schematische Prinzipdarstellung der erfindungsgemäßen Lösung, bei der die Schäden, beispielsweise durch Hagelschlag, auf einem Fahrzeugdach eines Personenkraftfahrzeuges festzustellen, zu beurteilen und zu dokumentieren sind. Hochglänzende, lackierte Oberflächen reflektieren auftreffendes Laserlicht. Der von einem Flächenscanner **1** erzeugte Laserlichtstrahl **2** wird auf die Oberfläche **3** des zu untersuchenden Fahrzeuges **4** gerichtet und durch eine handelsübliche Ablenkeinrichtung über die Oberfläche **3** geführt. Der Laserlichtstrahl **2** trifft auf die Oberfläche **3** auf und wird dort entsprechend dem Reflektionsgesetz der Optik reflektiert, nach dem bezogen auf die Flächennormale des gerade getroffenen Flächenelementes der Einfallswinkel gleich dem Ausfallswinkel ist. Der reflektierte Laserlichtstrahl **2** trifft auf einen ebenen Schirm **6**, auf dem die abgescannte Oberfläche sichtbar wird.

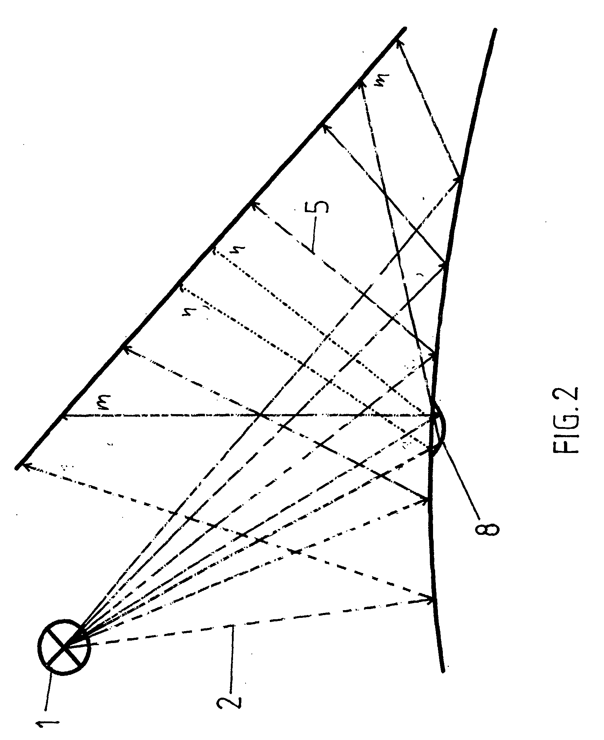

Die Genauigkeit der Abbildung und die Erkennbarkeit kleiner Details hängt dabei wesentlich vom Durchmesser des auftreffenden Laserlichtstrahles **2** ab, wobei gilt, dass die Auflösung umso höher ist, je kleiner der Durchmesser des Laserlichtstrahles **2** ist. Für die erfindungsgemäße Lösung kommen somit die Vorteile der Lasertechnik einer einfachen Erzeugung stark gebündelten Lichtes voll zur Geltung. Das bedeutet jedoch nicht, dass die erfindungsgemäße Lösung auf Laserlicht beschränkt ist. Vielmehr erfasst die Erfindung auch die Anwendung anderer Lichtquellen, sofern diese für eine Selbstfokussierung geeignet sind. Bewegt sich der Laserlichtstrahl **2** über die zu begutachtende Oberfläche **3**, so erscheint auf dem Schirm **6** eine Linie **7**, die ein exaktes Abbild der abgefahrenen Linie auf der Oberfläche **3** darstellt. Selbst kleinste lokale Abweichungen von der Oberfläche führen zu deutlichen Zacken in der sonst gleichförmigen Linie einer ungeschädigten Oberfläche. Sofern der Schirm **6** in einem möglichst weiten Abstand **A** von der zu prüfenden Oberfläche **3** positioniert wird, lässt sich eine entsprechende Vergrößerung der Abbildung erzielen. Eine gleichmäßige Wölbung der Oberfläche, wie sie beispielsweise bei einem Karosseriedach oder Kotflügel auftritt, wird ebenso als stetig gewölbter Linienzug abgebildet. Sind Dellen in der Oberfläche **3** vorhanden, werden diese Störungen des Oberflächenverlaufes durch Zacken in der Linienabbildung sichtbar. Dies ist in Fig. 2, die einen typischen Strahlenverlauf an einer deformierten Karosserieoberfläche zeigt, dargestellt. In der Fig. 2 bezeichnet die **n** den Strahlenverlauf mit einer Delle **8** und m den Strahlenverlauf ohne eine Delle **8** in der Oberfläche **3.**

Dem Schirm **6** ist ein Aufnahmemittel, beispielsweise eine Digitalkamera **9**, zugeordnet, mit deren Hilfe die durch den Flächenscanner **1** erzeugte Abbildung der Oberfläche **2** digitalisiert aufgenommen wird. Die digitalen Bildinformationen werden von der Digitalkamera **9** einer Auswerte- und Signalverarbeitungseinrichtung **10** zur Speicherung zugeführt, mittels der eine Analyse zur Bestimmung des Schadens durchgeführt wird. Das Auswerteergebnis wird auf dem Monitor **11** angezeigt und mit einem Drucker **12** als Messprotokoll ausgegeben.
Beim vorliegenden, in Fig. 1 gezeigten Beispiel, wird die Oberfläche **3** des gesamten Fahrzeugdaches abgescannt und als Bildinformationen aufgenommen und im Mikroprozessor **13** der Auswerte- und Signalverarbeitungseinrichtung **10** abgespeichert.
Im Mikroprozessor sind charakteristische Bildinformationen einer ungestörten Oberfläche **3** einer Vergleichskarosserie abgespeichert. Die gemessenen Bildinformationen werden mit charakteristischen Bildinformationen verglichen. Der Maß der Abweichung zwischen dem gemessenen Oberflächenprofil und der Vergleichssignatur für die ungestörte Oberfläche ist ein Gradmesser für die Art und dem Umfang der Schädigung.

### Beispiel 1

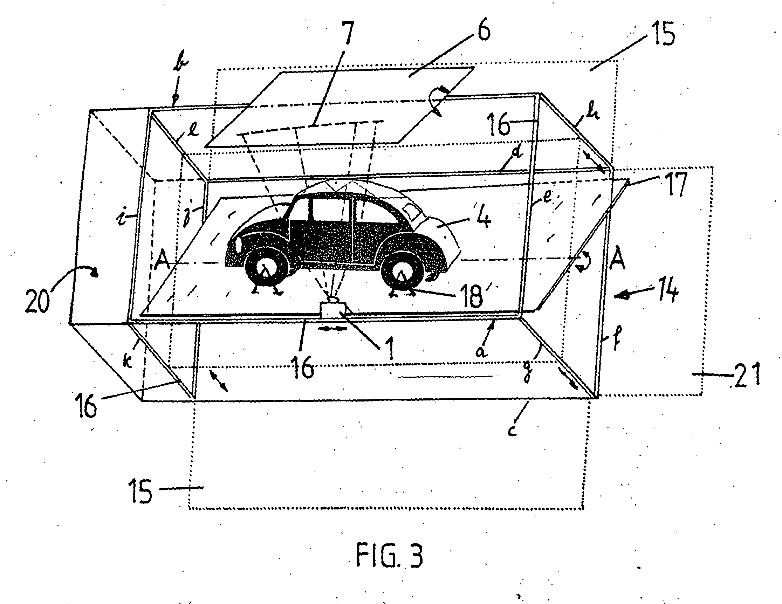

Fig. 3 zeigt die Anwendung der erfindungsgemäßen Lösung innerhalb eines containerartigen Traggestells **14**, in dem sich das zu prüfende Fahrzeug **4** befindet.
Dieses Traggestell 14 besteht im wesentlichen aus oberen Seitenstreben **a** und **b**, den unteren Seitenstreben **c** und **d**, den vorderen Stirnstreben **e, f, g** und **h** und den hinteren Stirnstreben **i, j, k** und **l** zusammensetzt. Jeweils eine Seitenstrebe, eine vertikale und eine horizontale Stirnstrebe sind durch Eckbeschläge stoffschlüssig miteinander verbunden. An den unteren Seitenstreben **c** und **d** sowie den unteren Stirnstreben **f** und **j** sind die Seitenwände verschenkbar angelenkt, so dass am Aufstellungsort durch Abschwenken der Seitenwände **15** das Traggestell **14** allseitig frei zugänglich ist.
Entlang den oberen Seitenstreben **a** und **b,** der vorderen oberen horizontalen und vertikalen Stirnstreben **e, g** und **h** sowie der hinteren horizontalen und vertikalen Stirnstreben **i, k** und **l** sind Führungsbahnen **16** montiert, die zum Führen des Flächenscanners **1** und des Schirmes **6** dienen. Der Flächenscanner **1** wird beispielsweise durch einen nicht dargestellten Schrittschaltmotor angetrieben und in den Führungsbahnen **16** horizontal oder vertikal bewegt. Auch eine Schwenkbewegung des Flächenscanners **1** ist durch eine entsprechende Kippvorrichtung möglich. Es kommt ein Argon- oder Krypton-Ionen-Laser mit einer Ausgangsleistung im Bereich von einigen 100 mW im TEMoo-Mode und einem Spotdurchmesser von weniger 0,5 mm zum Einsatz, so dass Strukturunterschiede von <0,5 mm erkannt und dokumentiert werden können. Bei einem Linienabstand von ebenfalls 0,5 mm werden somit Dellen **8** in dieser Größenordnung analysierbar.
Mit einer Strahlauslenkung von +/- 1000 mm sowohl in Längsals auch in Querrichtung kann beispielsweise eine Fläche von 2 m x 2 m in wenigen Sekunden abgetastet werden.
Selbst bei einer Linien-Ablenkfrequenz von 1000 Hz sind bei einem Zeilenvorschub von 0,5 mm auf einer Länge von 2 m nur 4000 Zeilen abzufahren. Das bedeutet, dass in 4 Sekunden steht ein vollständiges Bild einer Oberfläche von 4 m² auf dem Schirm 6 zur Verfügung.

Das zu prüfende Fahrzeug **4** fährt in das Traggestell **14** auf einen Messtisch **17** und wird dort mittels am Messtisch angelenkter Befestigungsmittel **18** verankert. Durch einen nicht dargestellten Hubmechanismus wird der Messtisch **17** zusammen mit dem Fahrzeug **4** auf eine solche Höhe geliftet, in der eine Schwenk- oder Rotationsbewegung des Fahrzeuges um seine Längsachse **A-A** problemlos ausgeführt werden kann.

Dem Flächenscanner **1** gegenüber ist ein Schirm 6 aus Mattglas in der Führungsbahn **16** eingehängt und mit einem Winkel von -45° geneigt so aufgestellt, dass die gesamte Oberfläche des Fahrzeuges **4** auf dem Schirm **6** abgebildet werden kann. Das Fahrzeug **4** wird dann mit einem geeigneten Antrieb zusammen mit dem Messtisch **17** um die Längsachse **A-A** verschwenkt oder in Rotation versetzt, so dass die Oberfläche **3** des Fahrzeuges **4** die von dem Flächenscanner **1** ausgesandten Laserstrahlen reflektiert und auf den Schirm **6** gelenkt werden. Dem Schirm **6** ist eine Digitalkamera **9** zugeordnet, die in der Fig. 3 aus Übersichtlichkeitsgründen weggelassen wurde (siege auch Fig. 1). Die Verarbeitung, Auswertung und Dokumentation der abgescannten Oberfläche **3** des Fahrzeuges **4** erfolgt entsprechend dem zuvor geschilderten Arbeitsablauf.

Die Antriebsaggregate für die Verschiebe- und Verschwenkbewegung des Flächenscanners **1** und des Schirms **6** sowie die Rotations- oder Verschwenkbewegung des Fahrzeugs **4** werden durch eine separate Prozessoreinheit **19** angesteuert, so dass ein für die Abtastung der Karosserieoberfläche korrelierender Bewegungsablauf sichergestellt ist.

Die Auswerte- und Signalverarbeitungseinheit **10**, der Monitor **11**, Drucker **12**, Mikroprozessor **13** und die Prozessoreinheit **19** für die koordinierte Ansteuerung der Antriebe sind einem vom Traggestell **14** abgeteilten separaten Raum **20** untergebracht. Sind die Messungen und Auswertungen abgeschlossen, wird das Fahrzeug **4** zusammen mit dem Messtisch **17** abgesenkt, der Messtisch **17** verriegelt, das Fahrzeug **4** aus der Verankerung gelöst und letzteres aus dem Traggestell **14** herausgefahren.
Durch Hochklappen der Seitenwände **16** wird das Traggestell **14** allseitig geschlossen und kann somit nach Aufladen auf einen Truck oder Sattelschlepper zum nächsten Einsatzort verbracht werden.

### Beispiel 2

Der Aufbau der erfindungsgemäßen Vorrichtung im Beispiel 2 entspricht im wesentlichen der des Beispiels 1. Der Unterschied besteht darin, dass auf eine Hubbewegung und eine Rotations- oder Verschwenkbewegung des Fahrzeuges **4** verzichtet sind. Das Abscannen des Karosserieoberfläche erfolgt dadurch, dass bei feststehendem oder bewegtem Fahrzeug lediglich der Flächenscanner **1** eine Verschiebebewegung in horizontaler und vertikaler Richtung ausführt und der Schirm **6** jeweils in die entsprechende Auffangstellung für die reflektierten Laserlichtstrahlen **2** gebracht wird.

### Aufstellung der verwendeten Bezugszeichen

| | |
|---|---|
| Lichtquelle, Flächenscanner | 1 |
| Laserlichtstrahl | 2 |
| Oberfläche der Karosserie | 3 |
| Fahrzeug | 4 |
| reflektierte Strahlen | 5 |
| Schirm | 6 |
| Linie | 7 |
| Delle | 8 |
| Digitalkamera | 9 |
| Auswerte- und Signalverarbeitungseinrichtung | 10 |
| Monitor | 11 |
| Drucker | 12 |
| Mikroprozessor | 13 |
| Traggestell | 14 |
| Seitenwand | 15 |
| Führungsbahnen | 16 |
| Messtisch | 17 |
| Befestigungsmittel | 18 |
| Prozessoreinheit | 19 |
| Kommunikations- und Bedienraum von 14 | 20 |
| Stirnwand | 21 |
| Abstand Oberfläche-Schirm | A |
| Längsachse des Fahrzeuges 4 | A-A |
| Obere Seitenstrebe von 14 | a, b |
| Untere Seitenstrebe von 14 | c, d |
| Vordere Stirnstreben von 14 | e, f, g, h |
| Hintere Stirnstreben von 14 | i, j, k, l |
| Strahlenverlauf mit Delle 8 | m |
| Strahlenverlauf ohne Delle 8 | n |

## Patentansprüche

1. Vorrichtung zum Erfassen, Bestimmen und Dokumentieren von Schäden, insbesondere durch plötzliche Ereignisse, beispielsweise Hagelschlag, verursachte Deformationen wie Dellen o. dgl. an lackierten Oberflächen, insbesondere Karosserieteilen von Fahrzeugen, mit einer stark fokussierenden Lichtquelle **(1)** zum Beleuchten einer mit Deformationen bzw. Schäden aufweisenden Oberfläche **(3)** von lackierten Karosserieteilen eines Fahrzeuges **(4)**, einer Ablenkeinrichtung für das Licht zum linien- und rasterförmigen Abscannen der Oberfläche, einem Schirm **(6)** zum Abbilden der Oberfläche mittels der von der Oberfläche reflektierten Lichtstrahlen, Mittel **(9)** zur Aufnahme der Bilder, einem Prozessor **(10)** zum Verarbeiten und Auswerten der aufgenommenen Bilder sowie Mittel **(11,12)** zur Anzeige und Ausgabe der Ergebnisse, wobei die Lichtquelle **(1)** und der Schirm **(6)** an einem Traggestell **(14)** sowie in diesem ein Messtisch **(17)** zur Aufnahme des Fahrzeugs angeordnet ist, **dadurch gekennzeichnet, dass** alle Einrichtungen **(1, 6,9,10,11,12)** in und an dem Traggestell **(14)** mit oberen und unteren, seitlichen sowie stirnseitigen Streben **(a,b,c,d,e,f,i,j)** so angeordnet sind, dass die Lichtquelle **(1)** entlang an den Streben verlaufenden Führungsbahnen **(16)** horizontal und vertikal verfahrbar und verschwenkbar ausgebildet, und der Schirm **(6)** entlang an den Streben horizontal verschiebbar und verschwenkbar ausgebildet und der Messtisch **(17)** um seine Längs- oder Vertikalachse **(A-A)** drehbar ist, wobei jede Position der lackierten Oberfläche **(3)** hinsichtlich Lichtquelle **(1)** und Schirm **(6)** in Reflexionsstellung bringbar ist, und dass eine Prozessoreinheit **(19)** zur Korrelation/Koordinierung der Bewegungen von Lichtquelle **(1)**, Schirm **(6)** und Messtisch **(17)** vorgesehen ist.

2. Vorrichtung nach Anspruch 1, **dadurch gekennzeichnet, dass** das Traggestell **(14)** ein Containertragrahmen ist, dessen Seitenwände **(15)** und Stirnwände **(21)** um die horizontalen oder vertikalen Streben so verschwenkbar ausgebildet sind, dass ein an den Stirn- und Seitenwänden offenes Traggestell für die Aufnahme und das Abscannen des Fahrzeuges entsteht.

3. Vorrichtung nach Anspruch 1, **dadurch gekennzeichnet, dass** die Streben des Traggestells zusammensteck- und verriegelbar ausgebildet sind.

4. Vorrichtung nach Anspruch 1 bis 3, **dadurch gekennzeichnet, dass** in dem Traggestell **(14)** ein Kommunikations- bzw. Bedienraum **(20)** abgeteilt ist, in dem die Mittel **(10)** für die Bildverarbeitung, die Prozessoreinheit **(19)** zur Koordinierung der Bewegungen von Lichtquelle **(1),** Schirm **(6)** und Fahrzeug **(4),** Mittel **(11,12)** zur Anzeige und Ausgabe der Messergebnisse und Mittel zur Kommunikation angeordnet sind.

5. Vorrichtung nach Anspruch 4, **dadurch gekennzeichnet, dass** der Kommunikations- und Bedienraum **(20)** wärme- und schallisoliert ist.

6. Vorrichtung nach Anspruch 1, **dadurch gekennzeichnet, dass** das Traggestell Teil eines mobilen Fahrzeuges, beispielsweise Truck, Lastkraftwagen o. dgl., oder ein mobiles Containerfahrgestell ist.

7. Vorrichtung nach Anspruch 1 bis 6, **dadurch gekennzeichnet, dass** die Lichtquelle **(1)** ein Laserlicht, gepulstes Blitzlicht oder Infrarotlicht ist.

8. Vorrichtung nach Anspruch 7, **dadurch gekennzeichnet, dass** das Laserlicht **(1)** ein Gaslaser wie Excimerlaser, Argonionenlaser, chemischer Laser, CO-Laser, CO₂-Laser, optisch gepumpte Moleküllaser, Festkörper-Laser oder Halbleiterlaser ist.

9. Vorrichtung nach Anspruch 1, **dadurch gekennzeichnet, dass** der Schirm **(6)** eine Leinwand, eine Mattglasscheibe, lichtempfindliche Platte oder eine selbstreflektierende Projektionswand ist.

10. Vorrichtung nach Anspruch 1, **dadurch gekennzeichnet, dass** der Schirm **(6)** ein elektro-optischer Empfänger, beispielsweise Dioden-Array, ist.

11. Vorrichtung nach Anspruch 1 bis 10, **dadurch gekennzeichnet, dass** das Licht die zu scannende Oberfläche **(3)** linienförmig abtastet, wobei der Vorschub beim Verschieben des Strahls kleiner ist als der Strahldurchmesser.

12. Vorrichtung nach Anspruch 1 bis 10, **dadurch gekennzeichnet, dass** die reflektierten Lichtstrahlen direkt auf dem Schirm **(6)** unter gleichzeitiger Vergrößerung des Abbildungsmaßstabes der Oberfläche **(3)** lenkbar sind.

13. Vorrichtung nach Anspruch 1, **dadurch gekennzeichnet, dass** die Mittel **(9)** zur Aufnahme des Oberflächenbildes solche einer Fotokamera, einer Digitalkamera oder Web-Cam sind.

14. Vorrichtung nach Anspruch 1, **dadurch gekennzeichnet, dass** die Mittel der Anzeige und Ausgabe der Messergebnisse solche eines Monitors und Druckers sind.

## Claims

1. Apparatus for detecting, determining and documenting damages, in particular deformations such as depressions or the like that are caused by sudden events, for instance hailstorms, to painted surfaces, in particular body parts of vehicles, with a highly focusing light source (1) for illuminating a surface (3) having deformations or damages to painted body parts of a vehicle (4), a deflection device for the light for linear and grid-pattern scanning of the surface, a screen (6) for imaging the surface by means of the light beams reflected by the surface, means (9) for recording the images, a processor (10) for processing and evaluating the images recorded, and means (11,12) for displaying and outputting the results, whereby the light source (1) and the screen (6) are arranged on a support frame (14) in which is provided a measurement table (17) for supporting the vehicle, **characterized in that** all devices (1, 6, 9, 10, 11, 12) are arranged in and on the support frame (14) with upper and lower braces and with lateral and end braces (a, b, c, d, e f, i, j) such that said light source (1) can travel and pivot horizontally and vertically along guide rails (16) running on said braces, said screen (6) is embodied horizontally displaceable and pivotable on said braces, and the measurement table (17) is rotatable about it's longitudinal or vertical axis (A-A), whereby each position of the painted surface can be brought into the reflection position with respect to said light source (1) with respect to said light source (1) and said screen (6), and **in that** a processor unit (19) is provided for correlating/coordinating the movements of light source (1), screen (6) and measurement table (17).

2. Apparatus in accordance with claim 1, **characterized in that** the support frame (14) is a container support frame, the side walls (15) and end walls (21) of which are embodied pivotable about said braces such that a supporting frame that is open on the end walls and side walls results for accommodating and scanning of the vehicle.

3. Apparatus in accordance with claim 1, **characterized in that** said braces of said support frame are embodied such that they can be put together and such that they are lockable.

4. Apparatus in accordance with claim 1 to 3, **characterized in that** separated off in the support frame (14) is a communications and/or operator space (20) in which are arranged said means (10) for image processing, said processor unit (19) for coordinating the movements of said light source (1), screen (6) and vehicle (4), said means (11,12) for displaying and outputting said measurements results, and said means for communication.

5. Apparatus in accordance with claim 4, **characterized in that** said communications and operator space (20) is heat- and sound-insulated.

6. Apparatus in accordance with claim 1, **characterized in that** said support frame is part of a mobile vehicle, for instance a truck or the like.

7. Apparatus in accordance with claim 1, **characterized in that** said light source is a laser light, pulsed flashlight, or infrared light.

8. Apparatus in accordance with claim 7, **characterized in that** said laser light (1) is a gas laser such as an excimer laser, argon ion laser, chemical laser, CO laser, CO₂ laser, optically pumped molecular laser, solid state laser, or semiconductor laser.

9. Apparatus in accordance with claim 1, **characterized in that** said screen (6) is a screen, matte glass plane, light-sensitive plate, or self-reflecting projection wall.

10. Apparatus in accordance with claim 1, **characterized in that** said screen (6) is an electro-optical receiver, for instance a diode array.

11. Apparatus in accordance with claim 1 through 10, **characterized in that** the light is guided through the surface to be scanned, **in that** the surface is scanned in successive lines, whereby the advance when the beam is displaced is smaller than the beam diameter.

12. Apparatus in accordance with claim 1 through, 10, **characterized in that** the reflected light beams are deflected directly onto the screen (6) with simultaneous enlargement of the image scale of the surface.

13. Apparatus in accordance with claim 1, **characterized in that** said means (9) for recording the surface image are those of a photographic camera, a digital camera, or a web-cam.

14. Apparatus in accordance with claim 1, **characterized in that** said means for displaying and outputting the measurement results are those of a monitor and printer.

## Revendications

1. Dispositif pour détecter, déterminer et documenter des endommagements, en particulier des déformations causées par des événements soudains, par exemple de la grêle, telles que des creux ou similaires, sur des surfaces laquées, en particulier des parties de carrosserie de véhicules, avec une source lumineuse (1) à forte focalisation pour l'éclairage d'une surface (3) présentant des déformations resp. des dégâts de parties de carrosserie laquées d'un véhicule (4), un dispositif de déviation pour la lumière pour le scannage en forme de ligne et de trame de la surface, un écran (6) pour la représentation de la surface au moyen des faisceaux lumineux réfléchis par la surface, des moyens (9) pour l'enregistrement des images, un processeur (10) pour le traitement et l'évaluation des images enregistrées ainsi que des moyens (11, 12) pour l'affichage et la sortie des résultats, la source lumineuse (1) et l'écran (6) étant disposés sur un bâti porteur (14) et une table de mesure (17) étant disposée dans ce bâti pour l'enregistrement du véhicule, **caractérisé en ce que** tous les dispositifs (1, 6, 9, 10, 11, 12) sont disposés dans et sur le bâti porteur (14) avec des montants (a, b, c, d, e, f, i, j) supérieurs et inférieurs, latéraux et frontaux de telle sorte que la source lumineuse (1) est conçue de façon à pouvoir coulisser et basculer horizontalement et verticalement et le long de glissières de guidage (16) agencées sur les montants, et l'écran (6) est conçu de façon à pouvoir coulisser et basculer horizontalement le long des montants et la table de mesure (17) peut tourner autour de son axe longitudinal ou vertical (A-A), chaque position de la surface (3) laquée pouvant être amenée dans la position de réflexion par rapport à la source lumineuse (1) et à l'écran (6), et **en ce qu'**une unité de processeur (19) est prévue pour la corrélation/coordination des mouvements de la source lumineuse (1), de l'écran (6) et de la table de mesure (17).

2. Dispositif selon la revendication 1, **caractérisé en ce que** le bâti porteur (14) est un cadre porteur de conteneur, dont les parois latérales (15) et les parois avant (21) sont conçues de façon à pouvoir basculer autour des montants horizontaux ou verticaux de telle sorte qu'un bâti porteur ouvert sur les parois avant et parois latérales est formé pour l'enregistrement et le scannage du véhicule.

3. Dispositif selon la revendication 1, **caractérisé en ce que** les montants du bâti porteur sont conçus emboîtables et verrouillables.

4. Dispositif selon l'une des revendications 1 à 3, **caractérisé en ce que** dans le bâti porteur (14) est séparé un espace de communication respectivement un espace de commande (20) dans lequel sont disposés les moyens (10) pour le traitement d'image, l'unité de processeur (19) pour la coordination des mouvements de la source lumineuse (1), de l'écran (6) et du véhicule (4), des moyens (11, 12) pour l'affichage et la sortie des résultats de mesure et des moyens pour la communication.

5. Dispositif selon la revendication 4, **caractérisé en ce que** l'espace de communication et de commande (20) est isolé vis-à-vis de la chaleur et vis-à-vis du son.

6. Dispositif selon la revendication 1, **caractérisé en ce que** le bâti porteur fait partie d'un véhicule mobile, par exemple un poids-lourd, un camion ou similaire, ou bien un châssis de roulement de conteneur mobile.

7. Dispositif selon l'une des revendications 1 à 6, **caractérisé en ce que** la source lumineuse (1) est une lumière laser, une lumière de flash pulsée ou une lumière infrarouge.

8. Dispositif selon la revendication 7, **caractérisé en ce que** la lumière laser (1) est un laser gazeux comme un laser à excimères, un laser à argon ionisé, un laser chimique, un laser CO, un laser CO₂, des lasers moléculaires à pompage optique, des lasers à corps solide ou des lasers à semi-conducteurs.

9. Dispositif selon la revendication 1, **caractérisé en ce que** l'écran (6) est une toile, une vitre mate, une plaque photosensible ou une paroi de projection autoréfléchissante.

10. Dispositif selon la revendication 1, **caractérisé en ce que** l'écran (6) est un récepteur électrooptique, par exemple un ensemble de diodes.

11. Dispositif selon l'une des revendications 1 à 10, **caractérisé en ce que** la lumière balaie en forme de ligne la surface (3) à scanner, l'avancement étant inférieur au diamètre de faisceau lors du déplacement du faisceau.

12. Dispositif selon l'une des revendications 1 à 10, **caractérisé en ce que** les faisceaux de lumière réfléchis peuvent être déviés directement sur l'écran (6) avec un agrandissement simultané de l'échelle de reproduction de la surface (3).

13. Dispositif selon la revendication 1, **caractérisé en ce que** les moyens (9) pour l'enregistrement de l'image de surface sont ceux d'un appareil photo, d'une caméra numérique ou d'une webcam.

14. Dispositif selon la revendication 1, **caractérisé en ce que** les moyens d'affichage et de sortie des résultats de mesure sont ceux d'un moniteur et d'une imprimante.
